# EUROPEAN PATENT APPLICATION

(11) **EP 4 008 808 A1**
(43) Date of publication of application: **08.06.2022**
(21) Application number: 21020613.2
(22) Date of filing: 03.12.2021
(51) Int. Cl.: C25D 13/18, C09D 5/44, C25D 13/20, C25D 13/22, G01N 33/94, C25D 13/08

(54) **METHOD OF OBTAINING A SENSOR WITH A SUBNANOMOLAR DETECTION LIMIT FOR DETERMINATION OF DOPAMINE LEVELS, ESPECIALLY IN URINE**

(30) Priority: 03.12.2020 PL 43622320
(71) Applicant: University of Wroclaw, 50-137 Wroclaw (PL)
(72) Inventor: ZAREBA, Aleksandra, 58-309 Walbrzych (PL); GRZESZCZUK, Maria, 54-151 Wroclaw (PL)
(74) Representative: Witek, Rafal

(57) **Abstract**

The subject of the invention is a method of obtaining a dopamine sensor by means of electrochemical polymerization - the PDA/PPy procedure. The process of deposition of a polydopamine layer is carried out on glassy carbon by chemical or electrochemical polymerization. On the prior obtained polydopamine layer on glassy carbon surface, pyrrole electropolymerization is carried out.

## Description

The subject of the invention is a sensor for the determination of dopamine made of a blend (mixture) layer of polydopamine and a conductive polymer. This invention finds application as an ultra-sensitive dopamine sensor in the presence of interfering substances such as ascorbic acid, uric acid, and other urine substances. There are electrodes modified with polypyrrole (PPy) [5], polyaniline (PANI) [6], graphene [7], nanoporous gold [8] to determine dopamine (DA). PPy nanomaterials are often used in the construction of the DA sensor because they have quite high chemical stability under conditions of dopamine testing in the natural samples, good electrochemical conductivity, and good biocompatibility. The problems with DA determination are the presence of interfering substances (uric acid - UA, ascorbic acid - AA) and, very often, low concentration (below 1nM) of dopamine in the natural samples. The electrochemical DA determinations necessitate the creation of such a sensor that will retain high sensitivity to DA, while eliminating the interference of substances that occur in the tested sample. The interference is related to compounds found in biological samples such as uric acid (UA) and ascorbic acid (AA). The ranges of the oxidation potentials of dopamine and these interferents are similar: DA (0.100, + 0.250) V vs. SCE, while UA and AA (-0.100 + 0.400) V vs. SCE. Concentrations of UA (0.01-1 µM) and AA (0.1-0.6 mM) are usually higher than DA concentrations (at most 10⁻⁸-10⁻⁶ M) [4], and ascorbic acid may additionally cause the determination error in consequence of the dopamine regeneration mechanism. One of the known solutions to the above problems in the literature consists in the modification of carbon nanotubes with the Nafion polymer on a glassy carbon substrate (patent CN1201146C [9]). Preparation of this sensor involves many steps, which are time consuming and costly. Nevertheless, this modification allows the separation of analytical signals of dopamine and interfering substances. Another known sensor material for dopamine is the composite of gold nanoparticles (AuNPs) with nanotubes (NT) of peroxygenated polypyrrole (OPPy). The linearity range for dopamine determinations for this sensor is 25nM - 2.5µM. To obtain this sensor, the expensive material AuNPs and zinc oxide (ZnO) were used. This material allows for the separation of interferences. Another complex dopamine sensor is the GC/bromophenol/nanoparticle(IrO₂-Pt) electrode [patent CN110006970A [11]], for which the linearity range for dopamine determinations is 0.1nM - 100µM. Note that this sensor material is very expensive because of costly IrO₂-Pt nanoparticles.

The object of the invention is to obtain an optimal method for the preparation of a dopamine sensor with a subnanomolar dopamine detection limit operating in the presence of interfering substances such as ascorbic acid, uric acid, and other substances found in urine.

The presented invention relates to a preparation method of a dopamine sensor by means of electrochemical polymerization. The process of potentiodynamic deposition of a polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCI / NaCl / LiCI, with a potential linearly changed in the range from - 0.8 V to + 0.65 V. On the prior obtained polydopamine layer on glassy carbon surface, pyrrole electropolymerization is carried out by a potentiostatic method from a solution of pyrrole as a functional monomer in the supporting electrolyte 10⁻³ M to 1 M KCI / NaCl / LiCI, with a constant potential from the range of + 0.45 V to + 1.2 V.

The invention also relates to a method for obtaining of a dopamine sensor by a second electrochemical polymerization procedure. The process of potentiodynamic deposition of a polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCl / NaCl / LiCI, with a potential linearly changed in the range from - 0.8 V to + 0.65 V. On the thus obtained polydopamine layer on the conductive surface, pyrrole electropolymerization is carried out by a potentiodynamic method from a solution of pyrrole as a functional monomer in the supporting electrolyte 10⁻³ M to 1 M KCI / NaCl / LiCI, with a potential linearly changed in the range from of - 0.8 V do + 1.20 V.

The invention also relates to a method for making a dopamine sensor by a third electrochemical polymerization procedure. Process of the potentiostatic deposition of a PDA polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCI / NaCl / LiCI, with a constant potential from the range of + 0.12 V to + 0.65 V. On the thus obtained polydopamine layer on a glassy carbon surface, pyrrole electropolymerization is carried out by a potentiostatic method from the pyrrole solution as a functional monomer in the supporting electrolyte 10⁻³ M to 1 M KCI / NaCl / LiCI, with a constant potential from the range of + 0.45 V to + 1.2 V.

The invention also relates to a method for making a dopamine sensor by a fourth electrochemical polymerization procedure. The process of the potentiostatic deposition of a PDA polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCI / NaCl / LiCI, with a constant potential from the range of + 0.12 V to + 0.65 V. On the thus obtained polydopamine layer on glassy carbon surface, pyrrole electropolymerization is carried out by a potentiodynamic method from a solution of pyrrole as a functional monomer in the supporting electrolyte 10⁻³ M to 1 M KCI / NaCl / LiCI, with a potential linearly changed in the range from - 0.8 V to + 1.20 V

The invention also relates to a method of obtaining a dopamine sensor by means of a mixed chemical-electrochemical polymerization procedure. The process of the deposition of a polymer layer is carried out on glassy carbon by a chemical method, from dopamine solution as a functional monomer in the form of a dopamine-containing solution with a concentration of 10⁻¹⁰ M - 1 M in the supporting electrolyte 10⁻⁵ M - 3 M KCI / NaCl / LiCI. On the thus obtained polydopamine layer on a glassy carbon surface, pyrrole electropolymerization is carried out by a potentiostatic method from the pyrrole solution as a functional monomer in the supporting electrolyte 10⁻³ M to 1 M KCl / NaCl / LiCI, with a constant potential from the range of + 0.45 V to + 1.2 V.

The invention also relates to a method for the preparation of a dopamine sensor by means of a second chemical-electrochemical mixed polymerization procedure. The process of the deposition of a polymer layer is carried out on glassy carbon by a chemical method, from dopamine solution as a functional monomer in the form of a dopamine-containing solution with a concentration of 10⁻¹⁰ M - 1 M in the supporting electrolyte 10⁻⁵ M - 3 M KCI / NaCl / LiCI. The thus obtained polydopamine layer on a glassy carbon surface, pyrrole electropolymerization is carried out by a potentiodynamic method from a solution of pyrrole as a functional monomer in the supporting electrolyte 10⁻³ M to 1 M KCl / NaCl / LiCI, with a potential linearly changed in the range from - 0.8 V to + 1.20 V.

The advantages of the method of obtaining the sensor according to the invention are the short synthesis time, the possibility of modification during the synthesis and the fact that the solutions used for the synthesis are neutral for the environment and humans. The sensor obtained by the method according to the invention is cheap, it is also characterized by the durability of the electrode material. Moreover, it has a lower limit of detection and a limit of quantification than the competing sensors described in the literature, namely on the order of 10⁻¹² M of dopamine in urine.

The attached figures contain:
Fig. 1 shows (A) a cyclic voltamperogram for polydopamine synthesis (v = 20mV/s, 25 scans), (B) a cyclic voltamperogram for polydopamine synthesis (v = 50mV/s, 25 scans), (C) a chronoamperogram for polydopamine synthesis.
Fig.2 shows (A) a chronoamperogram of polypyrrole synthesis on GC/PDA, (B) a cyclic voltamperogram of polypyrrole synthesis on GC/PDA.

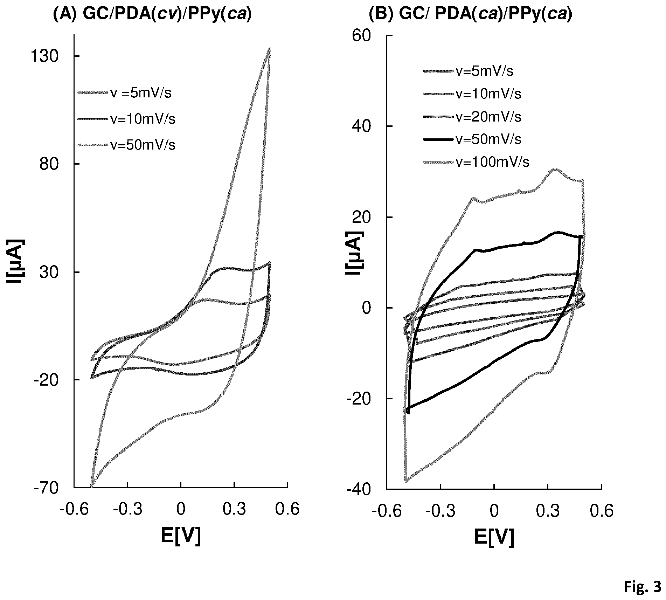

Fig. 3 shows a cyclic voltamperogram for the PDA-PPy blend in 0.1 M KCI (A) GC/PDA(cv)/PPy(ca), (B) GC/PDA(ca)/PPy (ca).

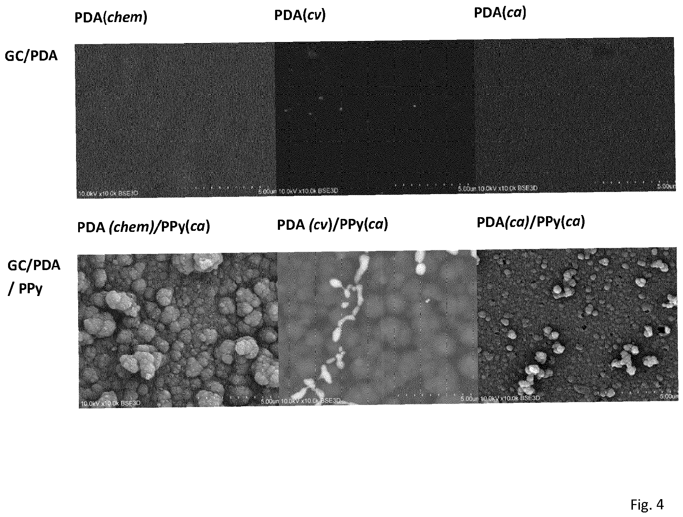

Fig. 4 shows SEM scanning electron microscopy image of the GC/PDA backing electrodes and the GC/PDA/PPy indicator electrodes.

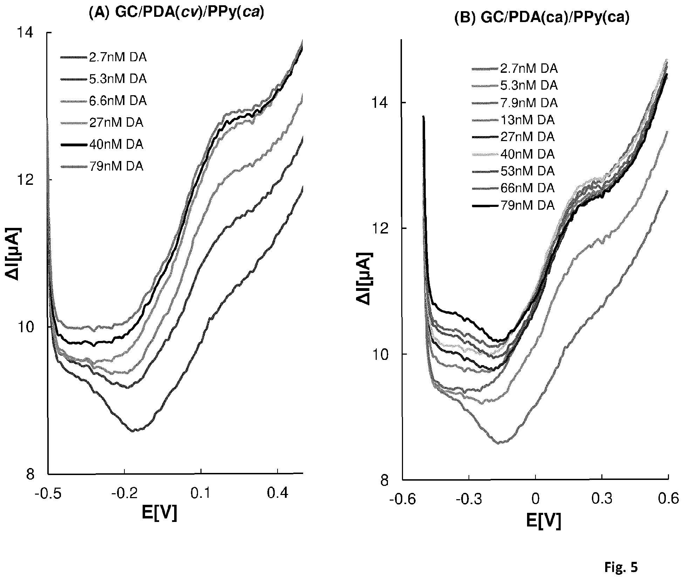

Fig. 5 shows plots of pulse and differential PDV voltammetry for the PDA-PPy blend in 0.1M KCI (A) GC/PDA(cv)/PPy(ca), (B) GC/PDA(ca)/PPy (ca).

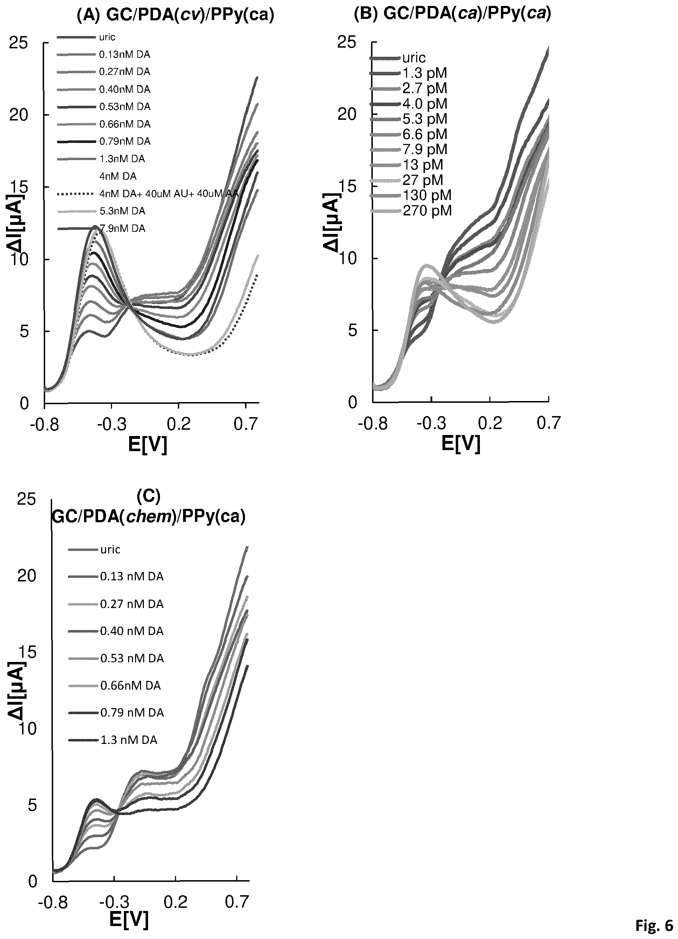

Fig. 6 shows the PDV for the PDA-PPy blend in 0.1M KCI (A) GC/PDA(cv)/PPy(ca), (B) GC/PDA(ca)/PPy(ca), (C) GC/PDA(chem)/PPy(ca).

### Example I

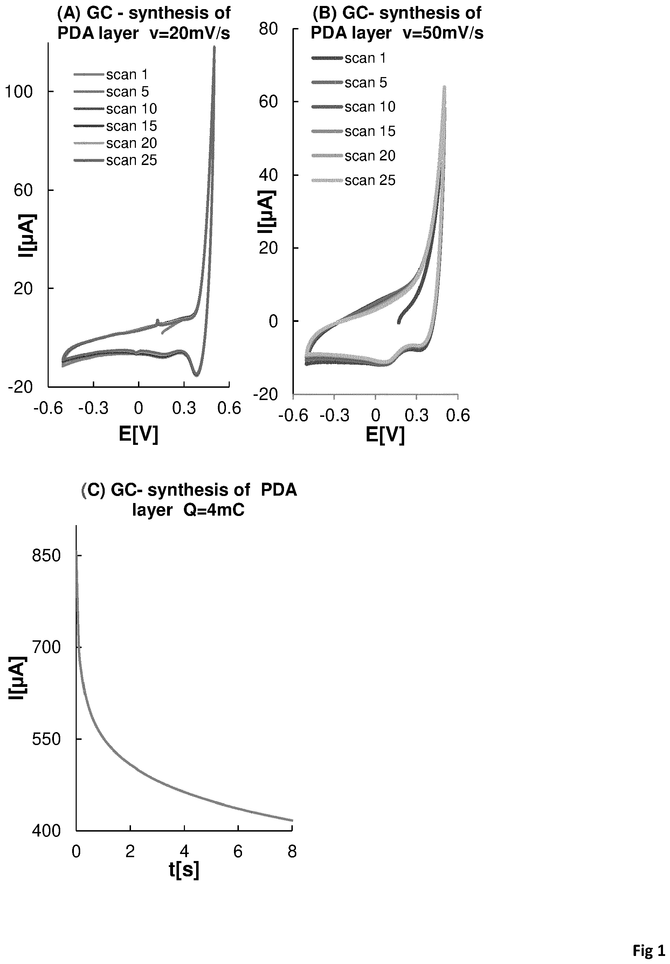

Obtaining of a dopamine sensor by the process of potentiodynamic deposition of a polymer layer on glassy carbon, by electrochemical polymerization from a dopamine solution as a functional monomer in the form of a dopamine-containing solution with a concentration of 0.1 M in the supporting electrolyte of 0.1 M KCI, with a potential linearly changed in the range from - 0.5 V to + 0.5 V, at a scan rate of 20 mV/s for 25 cycles. After electrosynthesis, polydopamine was washed in H₂O. As a result of the electropolymerization reaction with a controlled electrode potential, the formation of a transparent thin film of PDA on the surface of the glassy carbon GC electrode can be seen. The cyclic voltamperogram of polydopamine electrosynthesis is shown in Fig. 1.

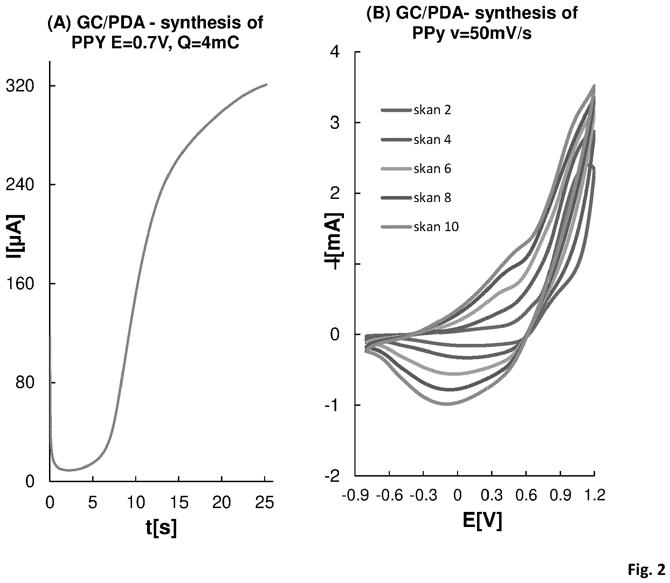

Then, on the polydopamine layer on glassy carbon thus obtained, the electropolymerization of pyrrole is carried out by a potentiostatic method from a solution of pyrrole as a functional monomer with a concentration of 0.15 M in the supporting electrolyte of 0.1 M KCI, with a constant potential E= 0.70V. After electrosynthesis of the polypyrrole, the layer is rinsed with H₂O. As a result of the electropolymerization reaction with the controlled electrode potential, the formation of a dark film of PPy on the surface of the glassy carbon (GC) electrode with the polydopamine layer can be seen. The voltamperogram of the polypyrrole electrosynthesis is shown in Fig. 2

### Example II

Obtaining of a dopamine sensor by the process of potentiodynamic deposition of a polymer layer on glassy carbon, by electrochemical polymerization from a dopamine solution as a functional monomer in the form of a dopamine-containing solution with a concentration of 0.1 M in the supporting electrolyte of 0.1 M KCI, with a potential linearly changed in the range from - 0.5 V to + 0.5 V at a scan rate of 50 mV/s for 25 cycles in deoxygenated solution. After electrosynthesis, polydopamine was washed in H₂O. As a result of the electropolymerization reaction with a controlled electrode potential, the formation of a transparent thin film of PDA on the surface of a glassy carbon GC electrode can be seen. The cyclic voltamperogram of polydopamine electrosynthesis is shown in Fig. 1

Then, on the polydopamine layer on glassy carbon thus obtained, pyrrole electropolymerization is carried out by a potentiodynamic method from a solution of pyrrole as a functional monomer with a concentration of 0.15 M in the supporting electrolyte of 0.1 M KCI, with a potential linearly changed in the range from - 0.8 V to + 1.20 V at a scan rate of 50 mV/s for 10 cycles in deoxygenated solution. After electrosynthesis, the polypyrrole was washed in H₂O. As a result of the electropolymerization reaction with the controlled electrode potential, the formation of a dark film of PPy on the surface of the glassy carbon (GC) electrode with a polydopamine layer can be seen.

### Example III

Obtaining of a dopamine sensor by the process of potentiostatic deposition of a polymer layer - PDA on glassy carbon, by electrochemical polymerization from a dopamine solution as a functional monomer in the form of a dopamine-containing solution with a concentration of 0.1 M in the supporting electrolyte of 0.1M KCl. Dopamine polymerization is carried out at a constant potential E=0.50 V. After electrosynthesis, the polydopamine was washed in H₂O. As a result of the electropolymerization reaction with a controlled electrode potential, the formation of a transparent thin film of PDA on the surface of the glassy carbon GC electrode can be seen. Then, on the polydopamine layer on glassy carbon thus obtained, pyrrole electropolymerization is carried out by a potentiostatic method from a solution of pyrrole as a functional monomer with a concentration of 0.15 M in the supporting electrolyte of 0.1 M KCI, with a constant potential at E0.70 V. After electrosynthesis, polypyrrole was rinsed with H₂O. As a result of the electropolymerization reaction with the controlled electrode potential, the formation of a dark film of PPy on the surface of the glassy carbon (GC) electrode with a polydopamine layer can be seen. The voltamperogram of the polypyrrole electrosynthesis is shown in Fig. 2

### Example IV

Obtaining of a dopamine sensor by the process of potentiostatic deposition of a PDA polymer layer on glassy carbon, by electrochemical polymerization from a dopamine solution as a functional monomer in the form of a dopamine-containing solution with a concentration of 0.1 M in the supporting electrolyte of 0.1 M KCI. Dopamine polymerization is carried out at a constant potential E=0.50 V. After electrosynthesis, the polydopamine was washed in H₂O. As a result of the electropolymerization reaction with a controlled electrode potential, the formation of a transparent thin film of PDA on the surface of the glassy carbon GC electrode can be seen. Then, on the polydopamine layer on glassy carbon thus obtained, pyrrole electropolymerization is carried out by a potentiodynamic method from a solution of pyrrole as a functional monomer with a concentration of 0.15 M in the supporting electrolyte of 0.1 M KCI, with a potential linearly changed in the range from -0.8 V to +1.20 V, at a scan rate of 50 mV/s for 10 cycles in deoxygenated solution. After electrosynthesis, the polypyrrole was washed in H₂O. As a result of the electropolymerization reaction with the controlled electrode potential, the formation of a dark film of PPy on the surface of the glassy carbon (GC) electrode with a polydopamine layer can be seen.

### Example V

Obtaining of a dopamine sensor by chemical polymerization. The process of deposition of the polymer layer is carried out on glassy carbon from a dopamine solution as a functional monomer in the form of a dopamine-containing solution of 0.1 M in the supporting electrolyte of 0.1 M KCI. After synthesis, polydopamine was washed in H₂O. As a result of the chemical polymerization reaction, the formation of a transparent thin film of PDA on the surface of the glassy carbon electrode GC can be seen. Subsequently, on the polydopamine layer on glassy carbon thus obtained, the pyrrole electropolymerization is carried out by a potentiostatic method from a solution of the pyrrole as a functional monomer in an electrolyte of 0.1 M KCI at a constant potential E=0.70 V. After electrosynthesis, the polypyrrole was washed in H₂O. As a result of the electropolymerization reaction with the controlled electrode potential, the formation of a dark film of PPy on the surface of the glassy carbon (GC) electrode with a polydopamine layer can be seen.

### Example VI

Obtaining of a dopamine sensor by chemical polymerization. The process of deposition of the polymer layer is carried out on glassy carbon from a dopamine solution as a functional monomer in the form of a dopamine-containing solution of 0.1 M in in the supporting electrolyte of 0.1 M KCI. After synthesis, polydopamine was washed in H₂O. As a result of the chemical polymerization reaction, the formation of a transparent thin film of PDA on the surface of the glassy carbon electrode GC can be seen. Then, on the polydopamine layer on glassy carbon thus obtained, pyrrole electropolymerization is carried out by a potentiodynamic method from a solution of pyrrole as a functional monomer with a concentration of 0.15 M in the supporting electrolyte of 0.1 M KCI, with a potential linearly changed in the range from - 0.8 V to + 1.20 V at a scan rate of 50 mV/s for 10 cycles in deoxygenated solution. After electrosynthesis, the polypyrrole was washed in H₂O. As a result of the electropolymerization reaction with the controlled electrode potential, the formation of a dark film of PPy on the surface of the glassy carbon (GC) electrode with a polydopamine layer can be seen.

## Claims

1. The method of obtaining sensor for dopamine by means of electrochemical polymerization, **characterized in that** the process of potentiodynamic deposition of a polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCI / NaCl / LiCI, with a potential linearly changed in the range from - 0.8 V to + 0.65 V. Thus, on the obtained polydopamine layer on a glassy carbon surface, pyrrole electropolymerization is carried out by potentiostatic method from the pyrrole solution as a functional monomer in the supporting electrolyte 10⁻³ M to 1 M KCI / NaCl / LiCI, with a constant potential from the range of + 0.45 V to + 1.2 V.

2. The method of obtaining a dopamine sensor according to claim 1, **characterized in that** on polydopamine layer on glassy carbon, pyrrole electropolymerization is carried out by a potentiodynamic method from the pyrrole solution as a functional monomer in the supporting electrolyte 10⁻³ M to 1 M KCI / NaCl / LiCI, with a potential linearly changed in the range from of - 0.8 V do + 1.20 V.

3. The method of obtaining sensor for dopamine by means of electrochemical polymerization, **characterized in that** the process of the potentiostatic deposition of a PDA polymer layer is carried out on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCI / NaCl / LiCI, with a constant potential from the range of + 0.12 V to + 0.65 V. On the thus obtained polydopamine layer on a glassy carbon surface, pyrrole electropolymerization is carried out by potentiostatic method from the pyrrole solution as a functional monomer in the supporting electrolyte 10⁻³ M to 1 M KCI / NaCl / LiCI, with a constant potential from the range of + 0.45 V to + 1.2 V.

4. The method of obtaining a dopamine sensor according to claim 3, **characterized in that** on polydopamine layer on glassy carbon, pyrrole electropolymerization is carried out by a potentiodynamic method from the pyrrole solution as a functional monomer in the supporting electrolyte 10⁻³ M to 1 M KCI / NaCl / LiCI, with a potential linearly changed in the range from of - 0.8 V do + 1.20 V.

5. The method of obtaining sensor for dopamine by means of chemical polymerization, **characterized in that** the process of the deposition of a polymer layer is carried out on glassy carbon by a chemical method, from dopamine solution as a functional monomer in the form of a dopamine-containing solution with a concentration of 10⁻¹⁰ M - 1 M in the supporting electrolyte 10⁻⁵ M - 3 M KCI / NaCl / LiCI. On the thus obtained polydopamine layer on a glassy carbon surface, pyrrole electropolymerization is carried out by a potentiostatic method from the pyrrole solution as a functional monomer in the supporting electrolyte 10⁻³ M to 1 M KCI / NaCl / LiCI, with a constant potential from the range of + 0.45 V to + 1.2 V.

6. The method of obtaining a dopamine sensor according to claim 5, **characterized in that** on a polydopamine layer on glassy carbon, pyrrole electropolymerization is carried out by of a potentiodynamic method from the pyrrole solution as a functional monomer in the supporting electrolyte 10⁻³ M to 1 M KCI / NaCl / LiCI, with a potential linearly changed in the range from of - 0.8 V do + 1.20 V.
